# EUROPEAN PATENT SPECIFICATION

(11) **EP 2 696 322 B1**
(45) Date of publication and mention of the grant of the patent: **05.12.2018**
(21) Application number: 12180120.3
(22) Date of filing: 10.08.2012
(51) Int. Cl.: G06Q 30/02, H04Q 3/00, H04M 3/22, H04M 3/42, H04L 12/26, G06F 17/30

(54) **Action triggering based on Subscriber Profile**
Aktionsauslösung basierend auf dem Abonnentenprofil
Déclenchement d'action sur la base du profil d'abonné

(43) Date of publication of application: 12.02.2014
(73) Proprietor: Zhilabs S.L., 08029 Barcelona (ES)
(72) Inventor: Arpirez Vega, Julio César, 08029 Barcelona (ES); Zapater Cano, Sergi, 08029 Barcelona (ES); Raventós Simón, Joan, 08029 Barcelona (ES)
(74) Representative: Grünecker Patent- und Rechtsanwälte PartG mbB

(56) References cited:
- EP-A2- 2 018 018
- US-A1- 2009 049 469
- US-A1- 2009 190 473

## Description

The present invention is related to a method and a respective system to allow for triggering actions based on a subscriber profile in a telecommunication network.

### Background

In the field of telecommunication it is well known to provide subscriber profiles or user profiles. However, at the present time, current telecommunication networks consist of a wide range of different nodes which are required for providing the service to each and every individual subscriber. Therefore, the profile generation faces a great amount of information of each subscriber for which a profile is to be generated and, still further, is confronted with thousands of actions of users per second. This requires big data management solutions.

As an example, EP 2 018 018 A2 discloses a system that allows for receiving data from a communication line and segregating the data into packets. The packets are stored and evaluated with respect to specific characteristics that might be user dependent. In order to centralize the management of the network monitoring, a hierarchical structure of servers is provided.

Further, US 2009/0049469 A1 discloses a method for monitoring data packet traffic in a communication network for at least two of a plurality of subscriber devices associated with a subscriber. A holistic subscriber profile is developed for the subscriber, based on the monitored data packet traffic and, based on this profile, advertisement data is selected and sent to the subscriber device.

A further content delivery targeting system is shown in US 2009/0190473 A1, wherein, based on traffic analysis, advertisement is sent to the user device. Further, a behavior analysis is provided, based on the obtained traffic analysis.

### Technical problem

Therefore, it is the aim of the present invention to provide a system and a method for triggering actions based on a subscriber profile in a telecommunication network wherein the system and the method allow for instant, i.e. real time or near real time, responses to the obtained and processed information of the subscriber profile.

### Solution

This problem is solved by the method for triggering actions based on a subscriber profile in a telecommunication network according to claim 1 and the corresponding system according to claim 6.

The dependent claims provide further preferred embodiments of the invention.

The embodiments and/or examples of the following description which are not covered by the appended claims are considered as not being part of the present invention.

The invention is characterized in that the method for triggering actions based on a subscriber profile in a telecommunication network comprises a collection step, which is performed in each of a plurality of collection servers to collect, from different types of sources within the network, such as from lock files or subscriber specific records or counters, subscriber level information on a subscriber using the telecommunication network wherein each of the collection servers is connected to a plurality of sources. Further, the method is characterized in that a processing step is performed at each of the collection servers to process the obtained subscriber-level step is performed at each of the collection servers to process the obtained subscriber-level information and/or correlate subscriber-level information obtained from the different sources to obtain behavioral information on the subscriber. Still further, a storing and indexing step to store the subscriber-level information in an unprocessed format and to generate and update an index, which allows indexed access to the stored subscriber-level information is provided as well as a profile generating step, performed at a plurality of mediation servers, to generate a subscriber profile by assigning the behavioral information and the obtained subscriber-level information to the subscriber. Each of the mediation servers is connected to a plurality of collection servers. Moreover, a triggering step is provided that is performed in the plurality of the mediation servers to evaluate, based on the generated subscriber profile, whether specific network adjustments for the subscriber are required and to trigger actions that cause the network to perform the required specific network adjustments, wherein the trigger step is carried out in real time or near real time, preferably within 1 second after the collection step on which the trigger step is based. Still further, a storing step to store the obtained subscriber profile is provided. Using such a two section server structure - wherein the first section obtains, from different types of sources, subscriber-level information and processes and/or correlates this subscriber level information obtained from the different sources to generate behavioral information on the subscriber and wherein the second section generates, based on this behavioral information, a subscriber profile and triggers, after evaluating whether specific network adjustments for the subscriber are required, actions that cause the network to perform the required specific adjustment - allows for effectively using the provided resources and achieves a real time response to the actions of the subscriber and the obtained information from these actions. Therefore, it is not only possible to generate, in real time, a subscriber profile but also to allow the network to adapt for each subscriber individually in real time or near real time.

It has been found that, with the claimed method steps, the possibility to react almost instantaneously has been achieved.

In a further embodiment, the method is characterized in that the subscriber-level information comprises at least one of radio elements, packet core elements, evolved packet core elements, signaling and data plane probes, deep packet inspection elements, optimizer elements, and NAT elements. This information allows the method to resolve problems that occur within the network connection, the quality of experience, or hardware components.

In another embodiment, the method is characterized in that the behavioral information contains information of at least one of quality of experience, customer value, roaming behavior, location of the subscriber, device information, protocol and application usage, and policies. By generating, from the obtained subscriber information, such behavioral information, it is possible to trigger actions that increase, for example, the quality of experience or to provide new feature for an important subscriber (i.e. a high customer value compared to an average customer value) or to present advertisement for improved hardware components.

In a further embodiment, the method is characterized in that the subscriber profile is further divided into a historical part, containing behavioral information on the subscriber obtained in the past, and an instant part, containing behavioral information on the subscriber obtained in the current session. This allows for not only triggering actions based on the actual behavior of the subscriber but also based on past behavior and, for example, also taking into account already triggered actions.

In a further embodiment, the method is characterized in that the specific network adjustments comprise at least one of network enhancement, customer care, and promotion. This can help to significantly increase the customer's experience when using the telecommunication network.

A system is provided that can perform the method for triggering actions based on a subscriber profile in a telecommunication network, wherein the system comprises a plurality of collection servers, each having an allocated storage, for collecting subscriber-level information from different types of sources within the network, such as from log-files, or subscriber specific records, or counters, on a subscriber using the telecommunication network. Each of the collection servers is connected to a plurality of sources. Furthermore, a plurality of mediation servers is provided, each having an allocated storage, for obtaining from the subscriber information obtained by the plurality of collection servers, behavioral information on the subscriber and for generating a subscriber profile by assigning the behavioral information and the obtained subscriber-level information to the subscriber and for evaluating, based on the generated subscriber profile, whether specific network adjustments for the subscriber are required and triggering actions that cause the network to perform the required specific network adjustments, wherein each of the mediation servers is connected to a plurality of collection servers. Moreover, the system is adapted to carry out the triggering of the required actions in real time, or near real time, preferably within 1 second after the collection of subscriber-level information on which triggering the required actions is based. Further, at least one persistent storage for storing the obtained subscriber profile is provided. By providing such an architecture for a system for triggering actions based on the subscriber profile in a telecommunication network, it is possible to obtain as much information about the subscribers as possible and, at the same time, to trigger actions based on the subscriber profile that cause the network to perform adjustments.

In a further embodiment, the system is characterized in that each collection server and each mediation server comprises at least real-time collectors, a P2P (peer-to-peer) communication channel, a high-speed in-memory/disk columnar store to store the obtained and/or generated data, an indexer, and actuators. By equipping each of the collection servers and mediation servers with these components, one can achieve great redundancy on the one hand, which will improve the resistivity of the whole system against failure of parts of the system and, on the other hand, the servers in each stage, i.e. the collection servers and the mediation servers, can cooperate and share tasks in any way, since each server is capable of carrying out all required steps for given tasks.

In a further embodiment, the system is characterized in that it further comprises a real-time complex event processing engine adapted to parallelize task execution by using all collection and mediation servers. Since due to the characteristics of the servers it is possible to share tasks and, hence, it is advantageous to achieve the highest degree of parallelization possible.

In a further embodiment, each of the plurality of collection servers is connected to each of the plurality of different types of sources. This allows for a great degree of redundancy and will improve the resistivity of the system against failure.

In a further embodiment, the plurality of mediation servers is connected to each of the plurality of collection servers. This not only improves the resistivity of the system against failure but also allows for each mediation server to obtain the information obtained and generated by each of the collection servers and, therefore, will accelerate the parallelized profile generation.

### Brief description of figures

Figure 1 - Schematic view of the global structure of the system for triggering actions
Figure 2 - Detailed schematic depiction of the collection server and the mediation server
Figure 3 - Block diagram of the method for triggering actions based on a subscriber profile
Figure 4 - Schematic depiction of the connection between the subscriber, the collection system, the correlation and analysis and the actuation.

### Detailed description of the figures

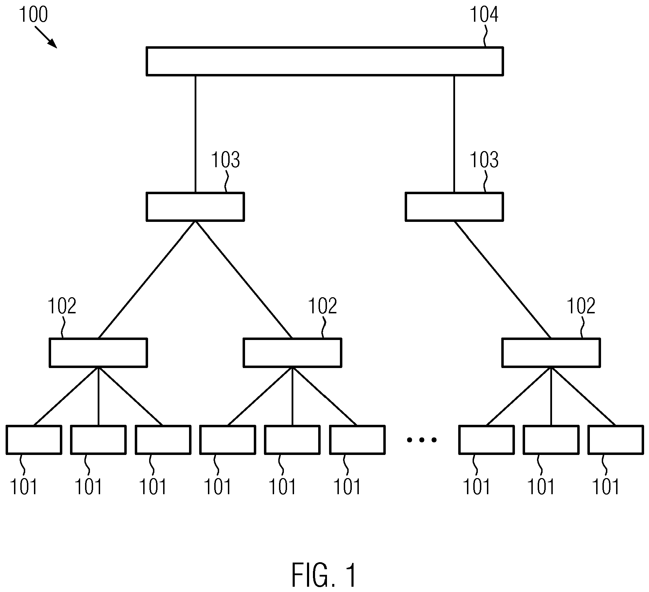

Figure 1 shows a schematic view of the global structure of the system 100 for triggering actions based on a subscriber profile in a telecommunication network. In the lowest level of the hierarchy the system has access to a plurality of sources (also known as nodes) 101. These sources can be of very different kinds. The only feature they have to share is that each of these sources can provide information on the subscriber. This information can be manifold. Since all the sources 101 must be capable of providing subscriber information or allow for obtaining subscriber information from these sources 101, it is preferred that the information regarding a customer is provided by these sources 101 via logs, usage detailed records or counters, although any other suitable kind of information can be used. The logs, usage detailed records and counters will be used here for explanatory purpose only. The logs belong to sources 101 wherein subscribers (i.e. the systems they use) leave traces for individual transactions in special files. These files may therefore include, for example, historical and detailed information of the transaction carried out by the subscriber. One source that has log files may, for example, be a firewall server or an IP hub or an internet web page server.

Furthermore, it is also possible that a system used by a subscriber leaves, within the sources, traces in the form of individual records for each action the subscriber (usage detailed records) undertakes. Such records may be obtained from, for example, a transaction server that keeps information about transactions performed by a user such as requesting a particular download, file, content or commercial product. Furthermore, in some cases, no detailed information is left behind by the system used by the subscriber in the sources, but only general information that can be accumulated in counters can be obtained. In these cases, only counters, i.e. the values that were counted, are provided by the sources 101. Therefore, all sources 101 that can provide subscriber information on any of the above described three levels are sources 101 that are suitable for the system described herein. As mentioned above, even other kinds of information can be obtained that cannot be assigned to any of the described information structures.

In the next plane of the system, a plurality of collection servers 102 is deployed. The main task of these collection servers 102 is to obtain as much information from the sources 101 as possible. To fulfill this task, it is preferred that the collection servers 102 are very close to the sources 101 in terms of data transfer time. This means that, for facilitating the complete process as fast as possible, the collection servers 102 may retrieve the subscriber information from the sources 101 directly, or at least with as few intermediate steps as possible. Since the amount of subscriber information that can be obtained from the sources 101 will be very great in terms of storage resources, and will require enhanced management of information, further structures or devices are allocated with the collection servers. Regarding the connection of the collection servers 102 and the source 101, it should be noted that it is possible to connect two different collection servers 102 to disjoined pluralities of sources 101. This can allow managing the amount of emerging information, since one collection server 102 will be responsible for obtaining information from a first group of sources 101, whereas a second collection server 100 will be used for obtaining subscriber information from a second group of sources 101 which is disjoined from the first group. Although this may provide an improved management of the obtained information, such an arrangement may be in some cases vulnerable to the failure of one or more collection servers 102. Therefore, it may also be advantageous to connect each collection server 102 to each source 101. This may lead to the redundant collection of information but will provide a resistance method for collecting subscriber related information with the collection servers 102 from the sources 101.

In the hierarchical structure above the collection servers 102, the mediation servers 103 are arranged. These servers, on the one hand, collect and further process the information they obtain from the collection servers 102 and, on the other hand, use this information, and the profiles that are created with the help of this information, to cause the telecommunication network to perform certain actions that result in a specific network adjustment that complies with the requirements of the subscriber. Like in the case of the collection servers 102 with the sources, the mediation servers 103 can be connected to each of the plurality of collection servers 102, or disjoined groups, or partly joined groups of collection servers. Connecting the mediation servers 103 to disjoined groups of collection servers 102 may allow for better information management. However, since all the mediation servers 103 are preferably equal to each other, assigning only specific tasks to each of the mediation servers 103 is not necessary and may even mean a waste of important resources. Therefore, allocating partly joined groups of collection servers 102 to the mediation servers 103, or even allocating all the collection servers 102 with each mediation server 103 allows not only for creating a system that is resistant against the failure of single mediation servers 103, but also allows for parallelization of the profile generation process and the triggering process. This will improve the reaction time of the whole system, i.e. the time that is necessary to trigger an action of the network to perform a specific network adjustment in reaction to subscriber information that is obtained from the sources 101.

After the mediation servers 103 have created a subscriber profile, it is evaluated by these mediation servers 103 whether the network 104 has to be adjusted in a specific way in order to comply with the requirements of the subscriber, i.e. whether and how for example the quality of experience of the subscriber can be improved by specific adjustments of the network 104. If this is the case, the mediation servers 103 are capable of instructing the telecommunication system 100 to perform the respective adjustment in such a way that the behavior of the system will only change for the respective subscriber.

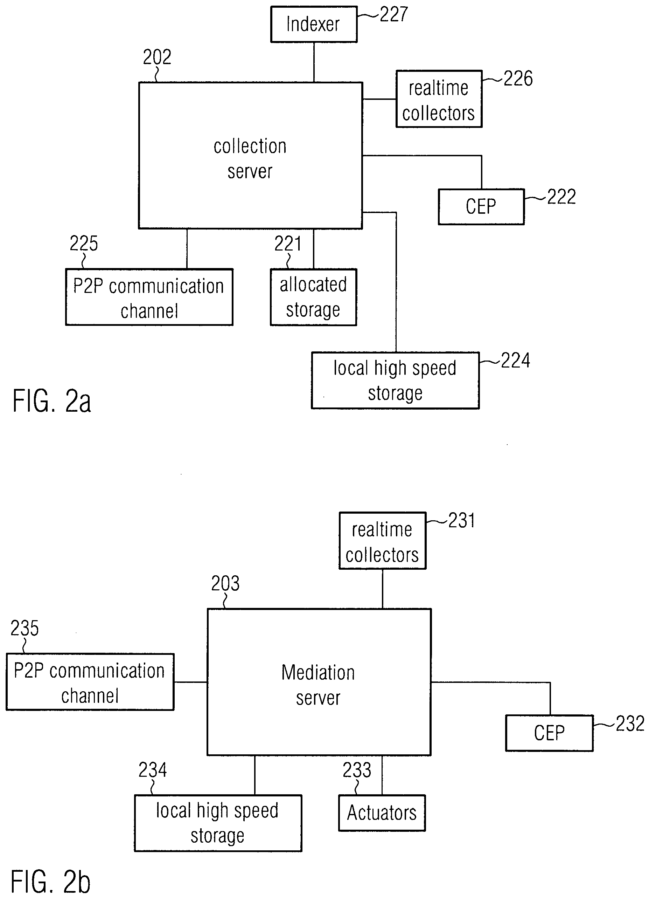

In order to fulfill these tasks, the collection servers 102 and the mediation servers 103 have to include further features. These are schematically depicted in Figure 2.

Figure 2a is a schematic depiction of the collection server 202. Besides all commonly known hardware and software features a server normally has, some further features are provided with the collection server 202. Besides the allocated storage 221 that can be used for long term storage of information that is obtained from the sources, a further local high-speed in memory/disk columnar store 224 can be provided in order to allow for storing information and allowing the mediation servers to retrieve information as fast as possible. Further, this storage 224 is used to store partial correlation results of the information obtained from sources. Further, in the case of the collection server 202, this local high-speed storage 224 will also contain indices to access log entries and further information obtained by the collection server 202 for fast access. Moreover, at least one, but preferably a plurality, of real time collectors 226 can be provided with each of the collection servers 202 which allows fast transfer of the information that is provided by the sources to the collection servers 202. Preferably, a high-speed near real time parallel complex event processing engine (CEP) 222 is provided. This will be most preferred in the case that each collection server 202 has access to each of the plurality of the sources. The CEP 222 allows for using all of the computer power of the servers by parallelizing task execution. This is most advantageous if each collection server 202 has access to the full amount of information that can be obtained from the sources. The CEP 222 will then be used to share, among all the collection servers 202, tasks related to processing and correlating the subscriber information obtained from the sources, as will be described later. Furthermore, a peer-to-peer communication 225 is provided with each collection server 202. Since each collection server 202 is connected to a plurality of sources and, furthermore, at least one mediation server, each of the collection servers 202 is part of a peer-to-peer network used to exchange data among different servers. In this context, it will also be possible to not only connect the collection servers 202 to sources on the one hand and mediation servers on the other side but also to enable the collection servers 202 to be connected to each other within a peer-to-peer network. This may allow for transferring information, for example subscriber information, that is obtained from one of the connection servers but not from the other, or to exchange correlated data obtained from the subscriber information, or to allow for managing the parallelization process. If, however, it is required to keep data movement as small as possible, such a connection of the collection servers 202 may not be provided, whereas the peer-to-peer communication channel 225 is still provided between the collection servers 202 and the sources on the one side and the collection servers 202 and the mediation servers on the other side. Indexers 227 may be provided with each collection server 202 in order to index all obtained subscriber information in order to allow fast access in case information needs to be retrieved via the mediation servers or in case of troubleshooting. In case it is intended to allow for the collection servers communicating with the telecommunication network, actuators can be provided. This can be advantageous in case a specific network adjustment is derivable without further processing of the obtained subscriber-information.

Figure 2b is a schematic depiction of a mediation server 203 as provided in the system according to Figure 1. Besides all known technical implementations and software features that servers usually have, the mediation server 203 further includes a peer-to-peer communication channel 235. This is because, on the one side, it is connected to a plurality of collection servers, as described in figure 2a, and, on the other side, it is connected to the telecommunication network in order to transmit triggers that cause the telecommunication system to perform specific network adjustments, as will be described later. Further, as for the collection server 202, the mediation server 203 is also equipped with an allocated storage 231 in order to save subscriber profiles. It may be preferable to provide a storage that allows for fast access (preferably less that 10 ms) although this is not a necessity. By providing such an allocated storage, the finalized profiles can be saved permanently without having influence on fast data exchange. This is advantageous because completed subscriber profiles will only be manipulated or used by the mediation server 203 when it is evaluated that specific network adjustments are required. Since this requires access to a specific subscriber profile only during long intervals (for example a number of seconds or minutes) it is not necessary to provide these subscriber profiles in a very fast storage in order to facilitate real time triggering of actions based on the subscriber profiles. If, however, it is the task to even accelerate the triggering process, the allocated storage 231 can also be provided as a local high speed in memory/disk columnar store as provided with the collection server 202. Indeed, such storage 234 will also be advantageously provided with the mediation server 203 in order to allow for fast access to information obtained from the correlation server and to allow for fast generation of the subscriber profile and for determining the required specific network adjustments since the local high speed in memory/disk columnar store 234 allows for a high access rate by the mediation server 203. Furthermore, as for the collection server 202, the high speed near real time parallel complex event processing engine (CEP) 232 will be provided in order to facilitate profile generation and evaluation of actions that need to be triggered in order to cause specific network adjustments as fast as possible.

By deploying such a CEP 232, the profile generation process can be shared among all of the mediation servers 203 that have access to at least partially the same information from the collection servers 202. If the mediation servers 203 each have access to all the collection servers 202, this parallelization of task execution can be performed at high efficiency and therefore time needed for triggering a respective action can be further reduced. Moreover, in order to trigger said actions, the mediation servers 203 are provided with actuators 233 that not only allow for communication of the mediation server 203 with the telecommunication network but also transmit actions that are to be triggered. Since the amount of information that has to be handled by the mediation servers 203 is not as big as that for the collection servers 202, it is not necessary to provide the mediation servers 203 with an indexer like for the collection servers 202. However, if the condensed information that is used by the mediation servers 203 is still of a significant size that, when not indexed, would significantly slow down the triggering process and would therefore not allow for real time triggering of actions, it can be advantageous to also provide the mediation servers 203 with respective indexers that can index pieces of information and therefore allow for fast access by the mediation servers.

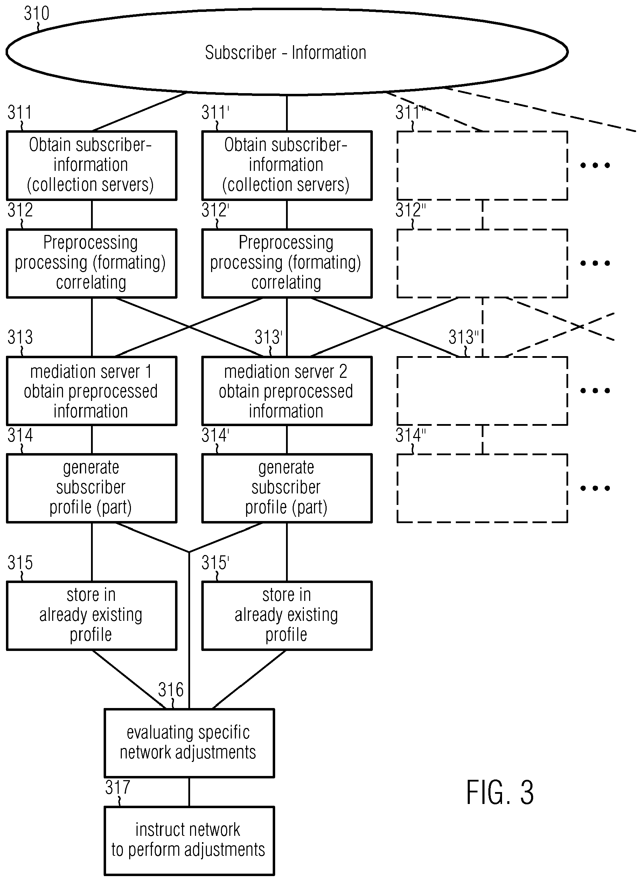

Figure 3 is a block diagram of the method for triggering actions based on a subscriber profile in a telecommunication network. At first, in step 311, subscriber information is obtained by the plurality of collection servers from a pool of sources that can provide subscriber information 310 Since, in most cases, more than one collection server will be provided, each of the collection servers will obtain respective subscriber information 311, 311^{I} and 311^{II}. It should be noted that it is possible to share, among all of the collection servers, the information that has to be obtained, although it can also be advantageous to allow for each collection server to obtain the complete approachable information. After this obtaining of subscriber information 311, 311^{I} and 311^{II}, preprocessing steps 312, 312^{I} and 312^{II} are performed. This preprocessing is carried out by the collection servers. It includes an identification part. In this part, the obtained logs are correlated using identifiers of the subscribers such as IMSI, IMEISV or MSISTN. Moreover, additionally, or alternatively, to correlating logs that belong to the same identifier, time stamps can be used, thereby enhancing the quality of the obtained information due to a correlation of the logs in time. It should be noted that, for some subscriber information 310, for example usage detail records that can be obtained from different sources, transaction IDs may be generated. In the case where such a transaction ID is related to the above mentioned user identity for at least one source, this transaction ID can be used to link all of the respective subscriber information 310 obtained from all sources for a specific subscriber. Moreover, the correlation can also be achieved by using the IP addresses that are assigned to the subscribers and the time stamp.

Since the IP address is globally unique as well, it can be used together with a time stamp to correlate the obtained subscriber information 310, like logs and usage detailed records.

It should be noted that, since the previously mentioned counters and comparable subscriber information that can be obtained do not contain any precise information on the subscriber, such correlation of data is not possible because no identification of for example a counter event to a user or subscriber can be achieved. It is only possible to assign a time stamp to such counter events. Although this may not help to improve the network for a specific subscriber, it can be used to enhance, if necessary, specific network qualities for all subscribers.

As an example, one could consider a web page or a web portal that is visited frequently at a given time of the day. During other times, less users may visit this web page or web portal. Therefore, it could be helpful to also evaluate the result of the counter and to assign a time stamp, i.e. time information, to these counters in order to resolve whether the web page or web portal is visited frequently at a given moment in time or not. In case it is, increasing the available bandwidth for every user can help to improve the quality of experience (QoE) for all users, although one group of users may already experience a good QoE and, therefore, will not experience a significant improvement, another group which suffered from a bad QoE, may experience a significantly improved QoE. Thereby, even without resolving detailed information on every subscriber, a network adjustment may be achieved by evaluating such non-user specific information. It should be noted that this correlation process preferably takes place in real time. However, since the amount of obtained data for each subscriber, and especially for all subscribers together, can become so complex, causing delays in the preprocessing steps 312, 312^{I}, and 312^{II}, this process may need some hundreds of milliseconds and up to some seconds.

After these preprocessing steps are completed, the obtained information is directed to at least one mediation server but preferably a plurality of mediation servers, i.e. each of the collection servers that conducted a preprocessing step 312 or 312^{I} or 312^{II} sends their information preferably to each of the mediation servers. In case it is not intended to connect each of the mediation servers to all collection servers, the collection servers only transmit their obtained information to the mediation servers that they are linked with. The mediation servers thereby obtain the preprocessed information in the step 313, 313^{I}, and 313^{II}.

After this information is obtained, each of the mediation servers proceeds to the profile generating step 314, 314^{I}, and 314^{II}. Since parallelization can speed up the process, it is preferred that each of the mediation servers only create a part of the subscriber profile. Since the mediation servers are all equipped with the same hardware and software components preferably, it can be advantageous to provide this generation of parts of the subscriber profile in a rotating manner, i.e. if, for example, three mediation servers are provided, each of them will prepare one third of the respective subscriber profile. In case, for example, three subscriber profiles have to be generated at the same time, the first of the mediation servers may create the first part of the first subscriber profile, the second part of the second subscriber profile, and the third part of the third subscriber profile. The second mediation server therefore may create the second part of the first subscriber profile, the third part of the second subscriber profile, and the first part of the third subscriber profile. The third mediation server may then create the third part of the first subscriber profile, the first part of the second subscriber profile, and the second part of the third subscriber profile.

By providing such a rotating subscriber profile part generation, different tasks can be fulfilled at the same time and it is possible to allow each of the mediation servers to make use of the parallelization in the best way possible. Since normally hundreds of subscriber access a popular telecommunication network at the same time, allowing for generating a great number of profiles at the same time is indeed required.

The generated subscriber profile may consist of a variety of parts. These parts could be, although not limited to, for example, a part related to the quality of experience for the subscriber, a customer value part, a roaming part, a location part, a device part, a protocol and application usage part, and a policies part.

In the quality of experience part of the subscriber profile, the mediation servers may evaluate, based on the information obtained from the correlation server, how the user is experiencing the telecommunication network from a quality perspective. To perform such an evaluation, some indicators are necessary like effective throughput indicators for uplink and downlink directions, TCP indicators like, for example, the amount of retransmission in percent, web indicators like webpage accessibility and data cell access rate streaming indicators, file sharing indicators, or mail indicators. The customer value part of the subscriber profile may contain information on whether the user is a high value or low value user in terms of ARPU (average revenue per user). In order to evaluate this customer value part, information on the basic monthly expenditure or product add-ons bill or the type of the subscriber can be collected and evaluated. The roaming part of the subscriber profile may include information on whether the user uses or is in roaming or not. Indicators for this part could be, although not limited to, for example, whether the user has a roaming profile in general, or whether they are in a roaming country, or whether roaming operators are used. The location part of the subscriber profile may contain detailed information on the location of the user. This can be achieved for mobile devices for example by using GPS data or cell data that is obtained from the subscriber information 310 by the collection servers during the subscriber information obtaining step 311, 311^{I} or 311^{II}. The handset part of the subscriber profile provides information on which devices or which device the subscriber uses. This information can be obtained for example by comparing the globally unique identifier obtained by the collection servers with the list of identifiers or by evaluating certain indicators that allow for identifying a special hardware component that is used when a certain application is used or a web page or web portal is visited. The protocol and application usage part of the subscriber profile may be evaluated by analyzing data obtained by the collection servers that is related to, for example, instant messaging applications or peer-to-peer connections, as well as HTTP or SMTP protocols. Furthermore, the policies part of the subscriber profile may be established by assessing information on whether a volume cap is set by the user or not.

It should be noted that, if enough persistent storage is provided, it is possible in steps 315 and 315^{I} to store a generated profile in an already existing profile for the given subscriber. If such storage and, therefore, past subscriber profiles are provided, it is also possible at this stage to divide the generated subscriber profile as a whole in an historical part and an instant part wherein the historical part may comprise information on how the user has performed in a given time frame in the past and wherein the instant part may contain information on how the user is behaving right now. Although the instant part of the profile is related to the current behavior of the user, it may also be advantageous to include, in the instant part of the subscriber profile, information on how the user was behaving during this day or this week and to include in the historical part only information that lies in the past, i.e. that is related to the day before or the week before last week. Even other constellations are possible. In any case, it would be advantageous to provide, with the historical part of the subscriber profile, also information on which network adjustments have already been carried out and whether the above mentioned parts of the subscriber profile were influenced by these network adjustments, i.e. whether, for example, the quality of experience of the user was improved.

No matter whether these storing processes 315 and 315^{I} are carried out, and no matter whether the profile is divided into an historical and an instant part, it will be evaluated 316 by the mediation servers whether specific network adjustments are necessary. This can be done by using all the mediation servers together, or by using only the mediation server that created a respective part of the subscriber profile, to evaluate, on this basis, whether specific network adjustments are necessary. This can be advantageous because this will not result in transmitting the whole subscriber profile or many parts of the subscriber profile among the mediation servers all the time. However, when a high degree of parallelization is used it can be advantageous to share the task for evaluating whether specific network adjustments are necessary among as many mediation servers as possible.

In general, the specific network adjustments can de divided into two major parts. The first part is rules wherein special "rules" are provided that specify conditions under which different actions are triggered depending on the subscriber profile. The other part is an "anomaly detection" that automatically results in an appropriate specific network adjustment. If such an anomaly is detected in the user profile (for example that quality of experience is less than 90% compared with the average quality of experience), certain actions can be automatically triggered. In this context it should be noted that it is possible, after the generation of the subscriber profiles in steps 314, 314' and 314" or after the storing processes 315 and 315', to cluster the plurality of obtained subscriber profiles of all users. This will allow for generating specimens that represent the average behavior of the users in terms of for example quality of experience, used policies and used devices. This allows for proving a good basis for anomaly detection because a simple identifier could be set that indicates that, for example, the quality of experience of a specific user is less than 90% of the average quality of experience and therefore a specific network adjustment has to be triggered.

The actions that are triggered, and therefore the specific network adjustments, can be divided into three main groups, although it might be possible to provide other groups or even more or less groups. Therefore, the groups that will be explained here are only mentioned for explanatory purposes. The first group is the network group whose actions and specific network adjustments are used to enhance the network for a given user. For instance, if the subscriber is of a high customer value and is suffering problems with the throughput, this may trigger and automatic upgrade of the network supplied throughput so the user gets a better quality of experience. In this group, also actions and network adjustments that have an effect on the traffic handling priority allocation and retention priority, the guaranteed bit rate for uplink and download can be included. Furthermore, network adjustments that aim at blocking, unblocking or throttling protocols and applications can be included in this group of actions.

In the customer care group, it could be possible to automatically open a ticket in the customer care center so that the user is notified of the problem with quality of experience and to let him know that care is taken about this problem. Furthermore, based on the obtained information as well as the already stored information in the subscriber profile, especially the specimens, it can be evaluated 360 whether a specific network adjustment would lead to an improvement in the quality of experience. If this is not the case, it could be concluded that the problem lies within the hardware of the subscriber and therefore a notification to upgrade the hardware could be sent to the subscriber. In case it can be directly derived from the obtained information that the bad quality of experience is caused by an insufficient hardware component, the step of evaluating whether or not specific network adjustments would improve the quality of experience can be skipped and a notification can be instantly sent to the subscriber.

The third group, i.e. the promotion engine group, may be used to provide discount or to provide buy recommendations for further software or hardware. The respective recommendations are based on the evaluation of the subscriber profiles and can, for example, depend on the location of the user and his historic volume and customer value. They can trigger a promotion so that the subscriber can, for example, get some additional volume or application usage using a special discount. After evaluating whether specific network adjustments are required 360 the mediation servers cause the actuator to instruct the network to perform the specific network adjustment which then causes respective modifications in the telecommunication network.

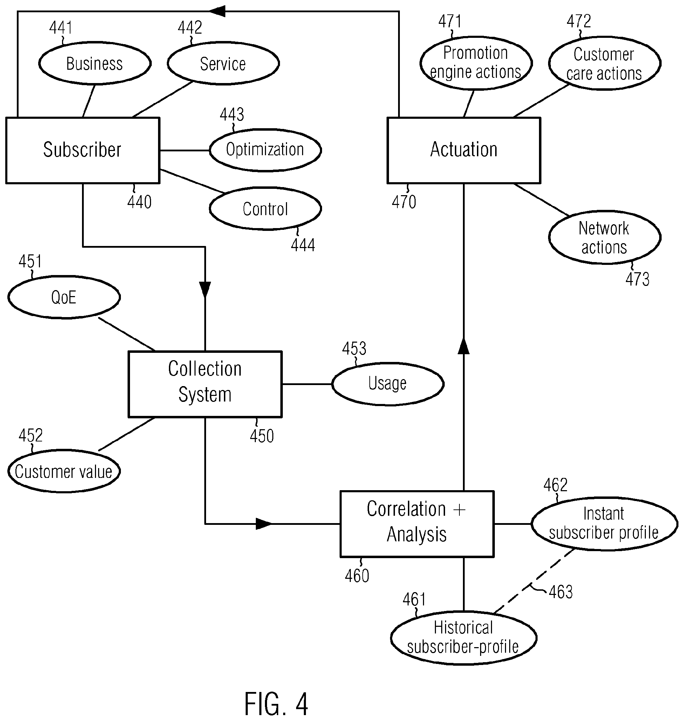

Figure 4 therefore depicts a block diagram that describes the correlation of the subscriber to the collection system and to the correlation and analysis process and the actuation process which includes specific network adjustments in general.

Starting with the subscriber 440 he may be able to attend business menus 441, a service menu 442 as well as an optimization menu 443 and a control menu 444. These groups represent the interaction of the subscriber 440 with the telecommunication network. Therefore, they do not only allow for the subscriber 440 to interact with a network but also represent parts of the sources from which information on the user can be obtained. Furthermore, since these groups represent parts of the user's interface to interact with the telecommunication network, these groups will be used by the specific network adjustments to improve, for example, the quality of experience for the subscriber 440.

The actions of the subscriber performed in the business menu 441, the service menu 442, the optimization menu 443 or the control menu 444 may provide information that can be collected by the collection system 450. Hence, the collection system 450 can collect information regarding the quality of experience 451 for the subscriber 450, the usage of the telecommunication network in general 453 and the customer value 452 of the subscriber.

This information can then be analyzed and correlated 460 in order to obtain a subscriber profile that may include an instant subscriber profile and an historical subscriber profile 462 and 461 that are interrelated 463 for example by setting a time value for which obtained information is related to the instant subscriber profile 462 and information that is related to the historical subscriber profile 461. Furthermore, the historical subscriber profile 461 may include information on specific network adjustments that were applied in the past and therefore will have influence on the instant subscriber profile 462 with regard to the actions and specific network adjustments that may be triggered in the current session.

Based on the generated subscriber profile during the correlation and analysis 460, an actuation process is initiated 470 that includes triggering specific network adjustments like promotion engine actions 471, customer care actions 472 and network performance adjustments 473. It should be noted that also other specific network adjustments can be triggered and therefore the three depicted ones are only provided for explanatory purposes. The triggered actions 470 in return have influence on the way the subscriber 440 experiences the business menu 441, the service menu 442, the optimization menu 443, and the control menu 444 and therefore will lead to a collection of further subscriber information and respective correlation and analysis 460 of this information and will result in probably further required specific network adjustments 470.

As explained above, the provided system and method for triggering actions based on a subscriber profile in the telecommunication network comprises an "endless loop" of the subscriber interacting with the telecommunication network, due to the provision of a collection system with subscriber related information which is then correlated and analyzed and results in actions that have influence on the behavior of the telecommunication network for this specific subscriber. In order to facilitate an ongoing improvement of, for example, the quality of experience for a given subscriber, a server architecture was described that allows for real time or near real time triggering of the required actions and therefore no significant delay in the improvement of the telecommunication network for a given subscriber exists. It should be noted that the disclosed method and system for triggering actions based on a subscriber profile in a telecommunication network is not limited to the above described qualities of the subscriber profile (i.e. it is not necessary to evaluate for example the quality of experience or the other described groups) but any other indicators can be used. Further, the actions that are triggered are not limited to the above disclosed groups related to promotion engine actions, customer care actions and network specification actions, but all other actions can be realized with this system and the disclosed method. It will be appreciated that the provided server architecture together with the provided method of generating the subscriber profile and, based on this subscriber profile, triggering respective actions and specific network adjustments is very flexible in terms of the content of the subscriber profiles and the actions that are triggered. In fact, the server architecture, and therefore the system and method, disclosed herein can be applied to almost any kind of subscriber-information, resulting in respective triggering of specific network adjustments.

## Claims

1. A method for triggering actions based on a subscriber profile in a telecommunication network (104), the method comprising:
a collection step (311, 311', 311"), performed in each of a plurality of collection servers (102), to collect, from different types of sources (101) within the network, comprising at least two from log-files, or subscriber specific records, or counters, subscriber-level information on a subscriber using the telecommunication network (104);
wherein each of the collection servers (102) is connected to a plurality of the sources (101);
a processing step, performed at each of the collection servers (101), to process the obtained subscriber-level information and/or correlate subscriber-level information obtained from the different sources (101) to obtain behavioural information on the subscriber;
a storing and indexing step to store the subscriber-level information in an unprocessed format and to generate and update an index, which allows indexed access to the stored subscriber-level information;
sending (313, 313', 313"), from each of the collection servers (102), obtained information to each of a plurality of mediation servers (103);
a profile generating step (314, 314', 314"), performed at the plurality of mediation servers (103), to generate a subscriber profile by assigning the behavioural information and the obtained subscriber-level information to the subscriber;
wherein each mediation server (103) is connected to a plurality of collection servers (102);
each collection server (102) and each mediation server (103) comprising at least real-time collectors (226, 231), a P2P communication channel (225, 235), a high-speed in-memory/disk columnar store (224, 234) to store the obtained and/or generated data, an indexer (227), actuators (233), each of the collection servers being connected via a P2P communication channel to each source and each of the collection servers being connected via a P2P communication channel to each mediation server and the collection servers are not connected via a P2P communication channel;
an trigger step, performed in the plurality of the mediation servers (103), to first evaluate, based on the generated subscriber profile, whether specific network adjustments for the subscriber are required and to trigger actions that cause the network to perform the required specific network adjustments;
a storing step (315, 315', 315") to store the obtained subscriber profile.

2. The method of claim 1, **characterized in that** the subscriber-level information obtained in the collection step (311, 311', 311") comprises at least one of radio elements, packet core elements, evolved packet core elements, signalling and data plane probes, deep packet inspection elements.

3. The method of claim 1 or 2, **characterized in that** the behavioural information contains information of at least one of quality of experience, customer value, roaming behaviour, location of the subscriber, device information, protocol and application usage, policies.

4. The method of any of claims 1 to 3, **characterized in that** the subscriber profile is further divided into a historical part, containing behavioural information on the subscriber obtained in the past, and an instant part, containing behavioural information on the subscriber obtained in the current session.

5. The method of any of claims 1 to 4, **characterized in that** the specific network adjustments comprise at least one of network enhancement.

6. A system (100) for triggering actions based on a subscriber profile in a telecommunication network (104), the system (100) comprising:
a plurality of collection servers (102), each having an allocated storage, for collecting subscriber-level information from different types of sources (101) within the network (104), including at least two from log-files, or subscriber specific records, or counters, on a subscriber using the telecommunication network (104) and for processing the obtained subscriber-level information and/or correlating subscriber-level information obtained from the different sources (101);
wherein each of the collection servers (102) is connected to a plurality of the sources (101);
a plurality of mediation servers (103), each having an allocated storage, for obtaining, from the subscriber information obtained by the plurality of collection servers (102), behavioural information on the subscriber and for generating a subscriber profile by assigning the behavioural information and the obtained subscriber-level information to the subscriber, and for evaluating, based on the generated subscriber profile, whether specific network adjustments for the subscriber are required and triggering actions that cause the network to perform the required specific network adjustments;
wherein each of the mediation servers (103) is connected to a plurality of collection servers (102) and each of the collection servers (102) is connected to each of the plurality of mediation servers (103) and is adapted to send obtained information to each of the plurality of mediation servers (103);
each collection server (102) and each mediation server (103) comprising at least real-time collectors (226, 231), a P2P communication channel (225, 235), a high-speed in-memory/disk columnar store (224, 234) to store the obtained and/or generated data, an indexer (227) for generating and updating an index for allowing indexed access to the subscriber-level information, actuators (233), each of the collection servers being connected via a P2P communication channel to each source and each of the collection servers being connected via a P2P communication channel to each mediation server and the collection servers are not connected via a P2P communication channel;
at least one persistent storage for storing the obtained subscriber profile.

## Patentansprüche

1. Verfahren zum Auslösen von Aktionen auf der Grundlage eines Abonnentenprofils in einem Telekommunikationsnetzwerk (104), wobei das Verfahren umfasst:
einen Sammelschritt (311, 311', 311"), der jeweils in mehreren Sammel-Servern (102) ausgeführt wird, um aus unterschiedlichen Arten von Quellen (101) innerhalb des Netzwerks, mit mindestens zwei aus Registrierungsdateien oder abonnentenspezifische Aufzeichnungen oder Zähler, Information auf Abonnentenebene über einen Abonnenten unter Anwendung des Telekommunikationsnetzwerks (104) zu sammeln;
wobei jeder der Sammel-Server (102) mit mehreren der Quellen (101) verbunden ist;
einen Verarbeitungsschritt, der in jedem der Sammel-Server (101) ausgeführt wird, um die erhaltene Information auf Abonnentenebene zu verarbeiten und/oder die Information auf Abonnentenebene, die aus den unterschiedlichen Quellen (101) erhalten wird, in Korrelation zu setzen, so dass eine Verhaltensinformation über den Abonnenten erhalten wird;
einen Speicher- und Indizierschritt zur Speicherung der Information auf Abonnentenebene in einem unverarbeiteten Format und zur Erzeugung und Aktualisierung eines Index, der einen indexgesteuerten Zugriff auf die gespeicherte Information auf Abonnentenebene ermöglicht;
Senden (313, 313', 313"), aus jedem der Sammel-Server (102), von erhaltener Information an jeden von mehreren Mediations-Servern (103);
einen Profilerzeugungsschritt (314, 314', 314"), der in den mehreren Mediations-Servern (103) ausgeführt wird, um ein Abonnentenprofil zu erzeugen, indem die Verhaltensinformation und die erhaltene Information auf Abonnentenebene dem Abonnenten zugeordnet wird;
wobei jeder Mediations-Server (103) mit mehreren Sammel-Servern (102) verbunden ist;
wobei jeder Sammel-Server (102) und jeder Mediations-Server (103) zumindest Echtzeit-Sammeleinheiten (226, 231), einen P2P-Kommunikationskanal (225, 235), einen Hochgeschwindigkeits-Speicherinternen/Scheibeninternen Säulenspeicher (224, 234) zur Speicherung der erhaltenen und/oder erzeugten Daten, eine Indiziereinheit (227), Aktuatoren (233) aufweist, wobei jeder der Sammel-Server über einen P2P-Kommunikationskanal mit jeder Quelle verbunden ist und jeder der Sammel-Server über einen P2P-Kommunikationskanal mit jedem Mediations-Server verbunden ist und die Sammel-Server nicht über einen P2P-Kommunikationskanal verbunden sind;
einen Auslöseschritt, der in den mehreren Mediations-Servern (103) ausgeführt wird, um zunächst auf der Grundlage des erzeugten Abonnentenprofils zu bewerten, ob spezielle Netzwerkeinstellungen für den Abonnenten erforderlich sind, und um Aktionen auszulösen, die bewirken, dass das Netzwerk die erforderlichen speziellen Netzwerkeinstellungen vornimmt;
einen Speicherschritt (315, 315', 315") zur Speicherung des erhaltenen Abonnentenprofils.

2. Verfahren nach Anspruch 1, **dadurch gekennzeichnet, dass** die Information auf Abonnentenebene, die in dem Sammelschritt (311, 311', 311") erhalten wird, Funkelemente und/oder Paketkernelemente und/oder evolvierte Paketkernelemente und/oder Sondierungseinheiten auf Signalisierungsebene und Datenebene und/oder tiefe Paketinspektionselemente umfasst.

3. Verfahren nach Anspruch 1 oder 2, **dadurch gekennzeichnet, dass** die Verhaltensinformation eine Information über Qualitätserfahrungswerte und/oder Kundenwerte und/oder netzübergreifendes Verhalten und/oder Position des Abonnenten und/oder Geräteinformation und/oder Protokoll- und Anwendungsnutzung und/oder Regeln enthält.

4. Verfahren nach einem der Ansprüche 1 bis 3, **dadurch gekennzeichnet, dass** das Abonnentenprofil ferner in einen historischen Teil, der Verhaltensinformation über den Abonnenten, die in der Vergangenheit erhalten wurde, und einen aktuellen Teil unterteilt wird, der Verhaltensinformation über den Abonnenten enthält, die in der aktuellen Sitzung erhalten wird.

5. Verfahren nach einem der Ansprüche 1 bis 4, **dadurch gekennzeichnet, dass** die speziellen Netzwerkeinstellungen mindestens eine Netzwerkerweiterung umfassen.

6. System (100) zum Auslösen von Aktionen auf der Grundlage eines Abonnentenprofils in einem Telekommunikationsnetzwerk (104), wobei das System (100) aufweist:
mehrere Sammel-Server (102), die jeweils einen zugewiesenen Speicherplatz haben, zur Sammlung von Information auf Abonnentenebene aus unterschiedlichen Arten von Quellen (101) innerhalb des Netzwerks (104), mit mindestens zwei aus Registrierungsdateien oder abonnentenspezifischen Aufzeichnungen oder Zählern, über einen Abonnenten unter Anwendung des Telekommunikationsnetzwerks (104) und zur Verarbeitung der erhaltenen Information auf Abonnentenebene und/oder zum Korrelieren der Information auf Abonnentenebene, die aus den unterschiedlichen Quellen (101) erhalten wird;
wobei jeder der Sammel-Server (102) mit mehreren der Quellen (101) verbunden ist;
mehrere Mediations-Server (103), die jeweils einen zugewiesenen Speicherplatz haben, zum Erhalten, aus der durch die mehreren Sammel-Server (102) erhaltenen Abonnenteninformation, von Verhaltensinformation über den Abonnenten und zur Erzeugung eines Abonnentenprofils durch Zuordnen der Verhaltensinformation und der erhaltenen Information auf Abonnentenebene zu dem Abonnenten, und zur Bewertung, auf der Grundlage des erzeugten Abonnentenprofils, ob spezielle Netzwerkeinstellungen für den Abonnenten erforderlich sind, und zum Auslösen von Aktionen, die bewirken, dass das Netzwerk die erforderlichen speziellen Netzwerkeinstellungen vornimmt;
wobei jeder der Mediations-Server (103) mit mehreren Sammel-Servern (102) verbunden ist und jeder der Sammel-Server (102) mit jedem der mehreren Mediations-Server (103) verbunden und ausgebildet ist, erhaltene Information zu jedem der mehreren Mediations-Server (103) zu senden;
jeder Sammel-Server (102) und jeder Mediations-Server (103) zumindest Echtzeit-Sammeleinheiten (226, 231), einen P2P-Kommunikationskanal (225, 235), einen Hochgeschwindigkeits-speicherinternen/platteninternen Säulenspeicher (224, 234) zur Speicherung der erhaltenen und/oder erzeugten Daten, eine Indiziereinheit (227) zur Erzeugung und zur Aktualisierung eines Index zum Ermöglichen eines indexgesteuerten Zugriffs auf die Information auf Abonnentenebene, Aktuatoren (233) umfasst, wobei jeder der Sammel-Server über einen P2P-Kommunikationskanal mit jeder Quelle verbunden ist, und jeder der Sammel-Server über einen P2P-Kommunikationskanal mit jedem Mediations-Server verbunden ist, und die Sammel-Server nicht über einen P2P-Kommunikationskanal verbunden sind; und mindestens einen permanenten Speicher zur Speicherung des erhaltenen Abonnentenprofils umfasst.

## Revendications

1. Procédé pour un déclenchement d'actions fondées sur un profil d'abonné dans un réseau de télécommunication (104), le procédé comprenant :
une étape de collecte (311, 311', 311"), effectuée sur chacun d'une pluralité de serveurs de collecte (102), pour collecter, auprès de différents types de sources (101) au sein du réseau, comprenant au moins deux de fichiers journaux, ou d'enregistrements spécifiques d'abonné ou de compteurs, des informations de niveau abonné sur un abonné utilisant le réseau de télécommunication (104) ;
dans lequel chacun des serveurs de collecte (102) est connecté à une pluralité des sources (101) ;
une étape de traitement, effectuée sur chacun des serveurs de collecte (101), pour traiter les informations de niveau abonné obtenues et/ou corréler les informations de niveau abonné obtenues à partir des différentes sources (101) pour obtenir des informations comportementales sur l'abonné ;
une étape de stockage et d'indexation pour stocker les informations de niveau abonné dans un format non traité et pour générer et actualiser un index, qui permet un accès indexé aux informations de niveau abonné stockées ;
envoi (313, 313', 313"), depuis chacun des serveurs de collecte (102), d'informations obtenues à chacun d'une pluralité de serveurs de médiation (103) ;
une étape de génération de profil (314, 314', 314"), effectuée sur la pluralité de serveurs de médiation (103), pour générer un profil d'abonné en affectant les informations comportementales et les informations de niveau abonné obtenues à l'abonné ;
dans lequel chaque serveur de médiation (103) est connecté à une pluralité de serveurs de collecte (102) ;
chaque serveur de collecte (102) et chaque serveur de médiation (103) comprenant au moins des collecteurs en temps réel (226, 231), un canal de communication P2P (225, 235), un stockage en colonnes en mémoire/sur disque à haute vitesse (224, 234) pour stocker les données obtenues et/ou générées, un indexeur (227), des actionneurs (233), chacun des serveurs de collecte étant connecté via un canal de communication P2P à chaque source et chacun des serveurs de collecte étant connecté via un canal de communication P2P à chaque serveur de médiation et les serveurs de collecte ne sont pas connectés via un canal de communication P2P ;
une étape de déclencheur, effectuée dans la pluralité de serveurs de médiation (103), pour d'abord évaluer, selon le profil d'abonné généré, si des ajustement de réseau spécifiques pour l'abonné sont ou non nécessaires et pour déclencher des actions qui font exécuter au réseau les ajustements de réseau spécifiques requis ;
une étape de stockage (315, 315', 315") pour stocker le profil d'abonné obtenu.

2. Le procédé de la revendication 1, **caractérisé en ce que** les informations de niveau abonné obtenues à l'étape de collecte (311, 311', 311") comprennent au moins un d'éléments radio, éléments de coeur de paquet, éléments de coeur de paquet évolués, sondes de signalisation et de plan de données, éléments d'inspection de paquet en profondeur.

3. Le procédé de la revendication 1 ou 2, **caractérisé en ce que** les informations comportementales contiennent des informations d'au moins un de qualité d'expérience, valeur clientèle, comportement d'itinérance, position de l'abonné, informations sur le dispositif, utilisation de protocoles et d'applications, politiques.

4. Le procédé de l'une quelconque des revendications 1 à 3, **caractérisé en ce que** le profil d'abonné est divisé en outre en une partie d'historique, contenant des informations comportementales sur l'abonné obtenues par le passé, et une partie instantanée, contenant des informations comportementales sur l'abonné obtenues au cours de la session courante.

5. Le procédé d'une quelconque des revendications 1 à 4, **caractérisé en ce que** les ajustements de réseau spécifiques comprennent au moins une d'améliorations de réseau.

6. Système (100) pour un déclenchement d'actions fondées sur un profil d'abonné dans un réseau de télécommunication (104), le système (100) comprenant :
une pluralité de serveurs de collecte (102), chacun disposant d'un stockage alloué, pour une collecte d'informations de niveau abonné auprès de différents types de sources (101) au sein du réseau (104), incluant au moins deux issus de fichiers journaux, ou d'enregistrements spécifiques d'abonné, ou de compteurs, sur un abonné au moyen du réseau de télécommunication (104) et pour un traitement des informations de niveau abonné obtenues et/ou une corrélation d'informations de niveau abonné obtenues auprès des différentes sources (101) ;
dans lequel chacun des serveurs de collecte (102) est connecté à une pluralité des sources (101) ;
une pluralité de serveurs de médiation (103), chacun disposant d'un stockage alloué, pour une obtention, à partir des informations d'abonné obtenues par la pluralité de serveurs de collecte (102), d'informations comportementales sur l'abonné et pour une génération d'un profil d'abonné en affectant les informations comportementales et les informations de niveau abonné obtenues à l'abonné, et pour une évaluation, selon le profil d'abonné généré, de la nécessité ou non des ajustements de réseau spécifiques pour l'abonné et un déclenchement d'actions qui font exécuter au réseau les ajustements de réseau spécifiques requis ;
dans lequel chacun des serveurs de médiation (103) est connecté à une pluralité de serveurs de collecte (102) et chacun des serveurs de collecte (102) est connecté à chacun de la pluralité de serveurs de médiation (103) et est adapté pour envoyer des informations obtenues à chacun de la pluralité de serveurs de médiation (103) ;
chaque serveur de collecte (102) et chaque serveur de médiation (103) comprenant au moins des collecteurs en temps réel (226, 231), un canal de communication P2P (225, 235), un stockage en colonnes en mémoire/sur disque à haute vitesse (224, 234) pour stocker les données obtenues et/ou générées, un indexeur (227) pour une génération et une actualisation d'un index pour une autorisation d'accès indexé aux informations de niveau abonné,
des actionneurs (233), chacun des serveurs de collecte étant connecté via un canal de communication P2P à chaque source et chacun des serveurs de collecte étant connecté via un canal de communication P2P à chaque serveur de médiation et les serveurs de collecte ne sont pas connectés via un canal de communication P2P ;
au moins un stockage persistant pour un stockage du profil d'abonné obtenu.
